# EUROPEAN PATENT APPLICATION

(11) **EP 2 551 789 A1**
(43) Date of publication of application: **30.01.2013**
(21) Application number: 11305979.4
(22) Date of filing: 27.07.2011
(51) Int. Cl.: G06K 9/00

(54) **Method for identifying an individual and corresponding device**

(71) Applicant: Gemalto SA, 92190 Meudon (FR)
(72) Inventor: Rouchouze, Bruno, 83270 ST - CYR SUR MER (FR)

(57) **Abstract**

The invention relates to a method for identifying an individual. The individual has at least one physical print.

According to the invention, the method comprises a print marking step by which at least one physical print 20 is marked at at least one body feature 22, 24.

The invention also pertains to a corresponding device for identifying an individual.

## Description

### Field of the invention:

The invention relates, in a general manner, to a method for identifying an individual.

An individual, like a human or an animal, has one or several physical prints, like a fingerprint(s), an eye iris print(s) and/or a face shape(s).

All the physical prints of one individual are peculiar to the individual. The concerned individual may thus be identified thanks to her or his physical prints.

Moreover, the invention also pertains to a device for identifying an individual.

### State of the art:

As known per se, biometrics consists of acquiring, analysing and recognizing physical characteristics of an individual.

Amongst the known techniques in biometrics, there exist methods of recognizing characteristics peculiar to a shape of a face or to an iris of an eye or, in most cases, fingerprint characteristics of the individual.

All the existing biometric identity check techniques comprises three phases. A first phase is a phase of capturing biometric data relating to an individual, as user, from a sensor. The captured biometric data is usually an image. A second phase is a phase for extracting a biometric signature from the captured biometric data. A third phase consists of comparing the extracted biometric signature with a reference signature stored previously, during a procedure termed enrollment. If the extracted biometric signature matches the stored reference signature, then the individual is identified or recognized.

A portable smart object (or a chip) that is carried by a medium, like an electronic document or a card, has a microprocessor that is limited in terms of processing capabilities with respect to a Personal Computer (or PC).

A biometric identity check technique using such an embedded chip technology includes, during an enrollment procedure, a reference biometric signature of a user of the chip that is stored into the chip in a secure manner and, during an identity check procedure, a terminal captures biometric data of an individual and then extracts a corresponding biometric signature. The extracted biometric signature is compared with the reference biometric signature either at the terminal side or on the chip. The chip having low processing capabilities, only few characteristics data relating to a fingerprint, namely characteristics points also known as minutiae, is registered in the chip memory. The registering of the minutiae allows avoiding too complex operations and therefore a too long processing time.

However, the minutiae, as user identifying biometric data that is thus captured, are not necessarily constant data with the time. As a matter of fact, the minutiae may differ from one capture session to another capture session. To ensure a user authentication, it implies to complete the biometric identification with a cryptographic process.

There is a need to render identifying biometric data more constant or stable with the time allowing thus to avoid to complete the biometric identification with a cryptographic process.

### Summary of the invention:

The invention proposes a solution for satisfying the just hereinabove specified need by providing a method for identifying an individual. The individual has at least one physical print.

According to the invention, the method comprises a print marking step by which at least one physical print is marked at at least one body feature.

The principle of the invention consists in introducing or adding one or several prints (as indicators) at one or several characteristics of one or several physical prints of the considered individual.

It is to be noted that the physical print(s) to which additional prints are thus introduced may be natural or artificial.

It is to be noted that there is no restriction about a technology used for marking a physical print(s). The technology used for marking a physical print(s) may be of any type.

Likewise, there is no limitation with respect to a shape of the mark used for marking each body feature. The mark may have any kind of shape.

The introduced mark(s) or indicator(s) allow(s) identifying and locating, in an easy, simple and stable manner, some particularity(ies) of the physical print(s) which is(are) thus marked.

The invention solution makes it possible to indicate or trace a location of each body feature of the physical print(s) thus marked.

The identification of the individual is facilitated since the added mark(s) provide(s) a clear distinction of the place(s) where the associated body feature(s) of the physical print(s) is(are).

Preferably, the at least one physical print is marked, in an invisible manner, at at least one minutia. Thus, there is no trace left visible to a human eye on the concerned physical print(s).

According to a further aspect, the invention is a device for identifying an individual. The individual has at least one physical print.

According to the invention, the device comprises print marking means by which at least one physical print is marked at at least one body feature.

As device, it may be a terminal that may be of any type.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates an enlarged view of a fingerprint without any mark; and
- Figure 2 represents an enlarged view of the fingerprint of figure 1 on which marks have been inserted at minutiae to be thus distinguished on the fingerprint, according to the invention.

### Detailed description:

The physical print(s) is(are) inherent to a shape of a body of a human or an animal. The physical print(s) include(s), among others, a fingerprint(s), an iris print(s), a hand print(s), a face print(s) which is(are) unique to the individual.

The physical print(s) may also be inherent to an object, such as an electronic component. The physical print(s) is(are) detectable through one or several technologies of the type Physically Unclonable Function (or PUF).

One embodiment of the invention is described infra in relation with a fingerprint to be identified and recognized in a sure and durable manner further to an implementation of the invention method for identifying an individual.

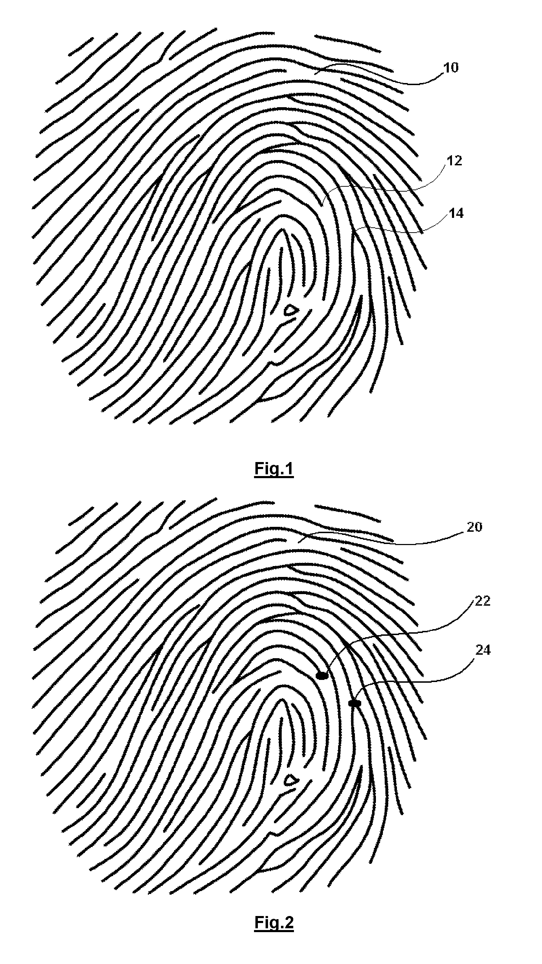

Figure 1 shows one example of a fingerprint 10, as particular physical print of an individual.

The fingerprint 10 presents several kinds of minutiae, as particular body features.

The minutiae may comprise other kinds of particularities, like one or several ridge endings, one or several ridge bifurcations, one or several independent ridges, one or several ridge enclosures, one or several spurs, one or several bridges, one or several deltas and/or one or several cores.

As known per se, a terminal (not shown) is arranged to scan and identify one or several minutiae resident on the fingerprint 10.

According to the invention, the terminal is arranged to mark the fingerprint 10 at at least one minutia.

The minutia(e) concerned by such a marking are easily identifiable, as minutia(e), and locatable in a sure and stable manner at any time after the marking.

The number and the type of minutiae which are to be concerned by the invention marking are configurable and depend on a level of security to be reached. Only a relatively small number of the minutiae, like one up to three, is to be marked when a relatively low level of security is to be reached for a fingerprint. A relatively big number of the minutiae, like from four, is to be marked when a relatively high level of security is to be reached for a fingerprint.

According to a preferred embodiment of the invention, the terminal (not represented) is arranged to add or insert a mark, in an invisible manner, at at least one minutia present on the fingerprint 10.

For the sake of clarity and conciseness, only two minutiae of the shown fingerprint 10, namely a ridge ending 12 and a ridge bifurcation 14, are referenced so as to be the subject of a print marking step(s) according to the invention method for identifying an individual.

Figure 2 shows a fingerprint 20, as a result of the fingerprint 10 that has undergone a print marking step according to the invention method for identifying an individual.

The resulting represented fingerprint 20 corresponds to the fingerprint 10 of Figure 1 on which additional points 22 and 24 have been marked at once (i.e. during the same marking session) at the ridge ending 12 and the ridge bifurcation 14 respectively.

The additional points 22 and 24 are represented, in a visible manner, for the sake of explanation, in an identical manner in terms of shapes for two different kinds of minutiae.

According to the preferred embodiment, the additional points 22 and 24, as added marks, are "written" or "printed", in a visible and/or an invisible manner, by using one or several print marking techniques.

As a preferred print marking technique, it is a technique by using an electromagnetic radiation that is invisible to the human eye. A print marking step consists of modifying an epidermis of the fingerprint 10 by means of an electromagnetic radiation thanks to a laser or the like.

For instance, the wavelength of the electromagnetic radiation is comprised either from around 10⁻³ m to around 10⁻⁶ m that corresponds to an infrared light or from around 10⁻⁷ m to around 10⁻⁸ m that corresponds to an ultraviolet light. The infrared and the ultraviolet lights are both invisible to the human eye.

According to another embodiment (not represented), instead of marking in a same way different kinds of minutiae, different marking techniques in terms of shapes and/or wavelengths of electromagnetic radiations are used for different kinds of minutiae. A shape, like a point, and/or a wavelength corresponding to an infrared light, are associated with a first kind of minutiae, like a ridge ending, while another shape, two paired points, and another wavelength corresponding to an ultraviolet light, are associated with a second kind of minutiae, like a ridge bifurcation. Two print marking steps are successively carried out. A first marking step is dedicated to marking the first kind of minutiae of the fingerprint, like a ridge ending. Then, a second marking step is dedicated to the second kind of minutiae of the fingerprint, like a ridge bifurcation or conversely.

As another print marking technique, it is by using a deposit of material particle with the help of a needle or the like. A corresponding print marking step consists of affixing at least one ink particle or metal flake, as material particle, onto an epidermis, as a surface and an external layer of the fingerprint 10 and/or a dermis, as an internal layer situated immediately below the surface of the fingerprint 10.

As another print marking technique, it is by using a deposit of one or several electronic components, such as one chip(s).

The two (or more) additional points 22 and 24 may have been marked at their respective minutiae during two (or more) different marking sessions. The two (or more) different markings sessions may use two (or more) different types of marking techniques.

The thus marked minutiae constitute a kind of biometric tattoo.

The marked minutiae renders the original fingerprint 10, as physical print, unique, stable, not modifiable and not public, i.e. an image of a fingerprint that is left on a surface of an accessible object, like a glass, does not reveal the marked minutiae.

The marked minutiae do not generate any loss of data relating to the original affected fingerprint 10.

The marked minutiae are identified upon a capture of biometric data relating to the individual followed by an extraction of a biometric signature relating to the individual.

The capture of biometric data relating to the individual whose the fingerprint 20 has been marked uses a technique that allows "reading", i.e. perceiving, the "written" marks.

The marked minutiae can be spotted in an easy, simple, durable and fixed manner.

The marked minutiae are easily detectable and locatable further to the associated marks that have been brought onto the considered fingerprint 20.

The marked minutiae constitute a biometric signature relating to the individual. Such a biometric signature is also termed a reference signature or template to be stored.

For instance, each additional mark is represented while being located, for instance, with a horizontal position on an axis x (not represented) and a vertical position on an axis y (not represented) where the axes x and y cross each other on the top of the fingerprint at its left side. The horizontal and vertical position values are each represented by, for instance, one byte.

The type of associated minutia may be further indicated by the type of the used mark. The used mark may depend on the used print marking technique.

The type of the used mark is represented by, for instance, one byte. A more precise mark may be used for representing a minutia, like an arrow oriented with a certain angle value with respect to the horizontal axis x. For instance, the type of the minutia is represented by 2 bits and the angle value by 6 bits.

Reference is made to a use of a secure chip (not represented), such as a chip carried by a smart card, a dongle or an electronic document, as a personal secure object or token, to store in a secure manner the reference signature.

Instead of a secure token, the reference signature may be stored within a remote server, as a central entity, that registers the reference signature of a list of individuals.

The secure chip is connected to a terminal that carries out a capture of biometric data relating to an individual whose the fingerprint 20 has been marked followed by an extraction of its biometric signature, as reference signature.

Once the resulting fingerprint 20 is obtained, a corresponding biometric signature, as reference signature or template, is extracted and stored by the chip.

The chip plays preferably a role of a safe for the reference signature stored within a chip memory for the enrolment procedure.

The chip includes preferentially at least one microprocessor, as data processing means, at least one memory, and at least one I/O interface which are internally linked together through a data and control bus.

The chip memory can be constituted by one or several EEPROM (acronym for "Electrically Erasable Programmable Read-Only Memory"), one or several ROM (for "Read Only Memory"), one or several Flash memories and/or any other memories of different types, like a RAM (for "Random Access Memory") type.

The chip microprocessor processes data originating from either a chip memory or, through one or several phone I/O interface(s), outside.

The chip is adapted to receive from an external requesting entity, like a terminal or a remote server, a command for requesting to identify and authenticate the chip user based upon the stored reference signature.

The chip microprocessor preferably executes security functions, in order to protect an access to information, like data stored and/or managed by the chip.

The security functions include preferably a user authentication application to be executed before accessing, in particular, data stored within the chip memory. To authenticate the user, the chip may store an application for verifying personal biometrics data, such as the reference signature, stored securely within the chip and to be input by the chip user, so as to compare with the stored personal biometrics data and authorize, when successful, a running of any application supported by the chip.

The chip memory may store user data, like a first name, a last name, a bank account number, a birth date, a private key, a Personal Identity Number, and/or other appropriate data.

The chip memory may store, for example, at least one banking type application needing to identify and authenticate a carrier, as user of the chip.

A server to be addressed for a banking transaction is identified within data stored within the chip memory. The server may be identified by an Uniform Resource Identifier (or URI), like an Uniform Resource Locator (or URL), as server identifier.

The server comprises one microprocessor(s), as means for processing data, means for storing data and one I/O interface(s).

The server is hosted by a computer and is dedicated to running an application for managing one or several banking services.

The server may be operated by either a bank operator and/or a service provider or on its behalf. As service provider, it may also be a company, as a transport operator, that manages a transport service, like a bus, a train, a plane and/or a loyalty service.

The invention method for identifying an individual is flexible. As a matter of fact, it is possible to choose a number and a type of minutiae to be marked according to security and processing time requirements.

## Claims

1. A method for identifying an individual, the individual having at least one physical print,
**characterized in that** the method comprises a print marking step by which at least one physical print (20) is marked at at least one body feature (22,24).

2. Method according to claim 1, wherein the at least one physical print is marked, in an invisible manner, at at least one minutia (22, 24).

3. Method according to claim 1 or 2, wherein the print marking step consists of either affixing at least one material particle onto a surface of the at least one physical print and/or below the surface of the at least one physical print, or modifying a surface of the at least one physical print by means of an electromagnetic radiation.

4. Method according to claim 2 or 3 depending on claim 2, wherein the at least one minutia includes at least one element of a group comprising:
- a ridge ending;
- a ridge bifurcation;
- an independent ridge;
- a ridge enclosure;
- a spur;
- a bridge;
- a delta;
- a core.

5. Method according to any of claims 1 to 4, wherein, the print marking step being a first marking step, the method further comprises a second print marking step, by which at least one physical print is marked at at least one minutia.

6. Method according to claim 5, wherein the second print marking step uses a second print marking technique that is different from a first print marking technique used for the first print marking step.

7. Method according to claim 6, wherein the second print marking step consists of modifying a surface of the at least one physical print by means of an electromagnetic radiation while the first print marking step consists of affixing at least one particle onto a surface of the at least one physical print and/or below the surface of the at least one physical print, or the first print marking step consists of modifying a surface of the at least one physical print by means of an electromagnetic radiation while the second print marking step consists of affixing at least one particle onto a surface of the at least one physical print and/or below the surface of the at least one physical print.

8. Method according to claim 6, wherein the first print marking step consists of modifying a surface of the at least one physical print by means of a first electromagnetic radiation while the second print marking step consists of modifying a surface of the at least one physical print by means of a second electromagnetic radiation, the second electromagnetic radiation being distinct from and the first electromagnetic radiation.

9. Method according to any of claims 1 to 8, wherein the method further comprises a marked print storing step by which at least one mark of the marked physical print is stored within a secure token, such as a smart card, and/or a server.

10. A device for identifying an individual, the individual having at least one physical print,
**characterized in that** the device comprises print marking means by which at least one physical print (20) is marked at at least one body feature.
